# EUROPEAN PATENT SPECIFICATION

(11) **EP 2 265 153 B1**
(45) Date of publication and mention of the grant of the patent: **12.10.2011**
(21) Application number: 09730938.9
(22) Date of filing: 08.04.2009
(51) Int. Cl.: A47G 19/34, G01F 11/46

(54) **DISTRIBUTION AND DOSING DEVICE FOR A POWDERY FOOD PRODUCT**
VERTEILUNG UND DOSIERVORRICHTUNG FÜR EIN PULVERFÖRMIGES LEBENSMITTELPRODUKT
DISPOSITIF DE DISTRIBUTION ET DE DOSAGE POUR PRODUIT ALIMENTAIRE EN POUDRE

(30) Priority: 11.04.2008 FR 0852474
(43) Date of publication of application: 29.12.2010
(73) Proprietor: Compagnie Gervais Danone, 75009 Paris (FR)
(72) Inventor: VANDAMME, Patrick, 59160 Lomme (FR); BOURDIN, Frédéric, 69330 Meyzieu (FR); PELTIER, Fabrice, 75001 Paris (FR); COSSON, Didier, 95000 Cergy Village (FR)
(74) Representative: Cabinet Plasseraud
(86) International application number: PCT/EP2009/054243
(87) International publication number: WO 2009/124975

(56) References cited:
- US-A- 5 437 393
- US-A- 5 495 962
- US-A- 5 529 221

## Description

The present invention relates to distribution and dosing devices for fluid food products and in particular but not exclusively a powdery food product such as for example milk powder.

Such devices can comprise a stand formed from a base and an upright, and a distribution head, mounted on said stand, the distribution head comprising:
- a reception housing suitable for receiving a container of powdery food product,
- an outlet opening,
- a channelling device suitable for channelling the flow of the product from the reception housing to the outlet,
- a dosing device for the product channelled by the channelling device.

A distribution device of this type is known from the document US5495962-A.

The purpose of the present invention is in particular to develop distribution and dosing devices for food products, in particular to further improve the ease of use by avoiding the risk of spilling the powdery product during the reloading of the container or the replacement of an interchangeable container.

To this end, according to the invention, the distribution and dosing device for a food product comprises:
- a stand comprising a base suitable for being placed on a horizontal plane and an upright,
- a distribution head, mounted on said stand, and comprising:
- a reception housing suitable for receiving a container of powdery food product,
- an outlet opening,
- a channelling device suitable for channelling the flow of the product from the reception housing to the outlet,
- a dosing device for the product channelled by the channelling device.

Said distribution head is connected by at least one articulated linkage to said upright, the distribution head being mobile between a loading position in which the reception housing is oriented substantially downwards, and a distribution position in which the outlet opening is oriented substantially downwards.

Thanks to these arrangements, the container containing the powdery food product such as for example milk powder can be easily exchanged. This container, once the lid is removed, is installed in the reception housing whilst the opening of the container is still oriented upwards. The distribution head and the container received in the latter are then displaced with the aid of the articulation into the distribution position, in which the opening of the container is oriented downwards and allows the fluid product to flow out by gravity. The risk of spilling the powdery product during (the reloading of the container or during) the replacement of the interchangeable container is thus avoided.

In various embodiments of the invention, it is possible optionally to also have recourse to one and/or the other of the following arrangements:
- the articulated linkage comprises a swivelling linkage the axis of which is substantially horizontal,
- the articulated linkage is mobile along a substantially vertical axis, making it possible to lower the distribution head towards the base when it is in the loading position; thanks to this arrangement, the reception housing can be engaged on the container by lowering, without having to raise the container in order to position the latter on the reception housing;
- the vertical movement of the articulated linkage comprises a device for locking the vertical position on the upright, which also makes it possible to adjust the height of the outlet opening relative to the height of the feeding bottle into which the powder flows;

- the device for locking the vertical position is automatically unlocked when the distribution head is in the loading position; which makes the installation of a new container in the reception housing particularly easy, the rotation of the distribution head being able for example to automatically lead to the unlocking of the vertical movement;
- the base comprises a positioning indentation making it possible to position the container face-to-face with the reception housing of the distribution head when the latter is in the loading position; which facilitates the ideal positioning of the container in the axis of the housing of the distribution head and its perfect coupling during the descent of the housing onto the container;
- the reception housing comprises at least one latch element suitable for engaging with the container in order to retain the latter in the reception housing; which allows a rapid latching of the container in the housing without resorting to additional handling, but a screw-fixing is not excluded;
- the distribution device also comprises at least one actuating element making it possible to disengage the latch element in order to release the container, which allows rapid unlocking of the container when the latter is empty;
- the distribution head is held in the loading position by an indexing element and the distribution head is held in the distribution position by said indexing element, which makes it possible to hold the distribution head in these two particular positions and which also makes it possible to give the user haptic feedback for each of these particular positions.
- the channelling device also comprises at least one transparent part through which the flow of the product is visible; this transparent part forming a window which allows the user to verify whether or not powder remains in the distribution head, and to know whether to proceed with the replacement of the container.

Other aspects, purposes and advantages of the invention will become apparent on reading the following description, given by way of a non-limitative example. The invention will also be better understood with reference to the attached drawings in which:
- Figure 1 is a diagrammatic perspective view of a device according to the invention;
- Figure 2 is a side view of the distribution device of Figure 1 in the position prior to loading;
- Figure 3 is a view analogous to Figure 2 in which the device is in position of engagement on a product container;
- Figure 4 is a view analogous to Figure 2 in which the device is in distribution position;
- Figure 5 is a front view of the distribution device represented in Figure 4;
- Figure 6a is a simplified top view of the distribution device represented in Figure 5;
- Figure 6b is a view analogous to Figure 6a for which a locking system is subjected to a manual unlocking action;
- Figure 6c is a simplified top view of the distribution device of Figure 3, in the loading position;
- Figure 7a is an enlarged view of the locking system of Figure 6a;
- Figure 7b is a side view of Figure 7a;
- Figure 7c is a rear view of the locking device in the vertical position;
- Figure 8 is a diagrammatic perspective view of a dosing valve; and
- Figure 9 diagrammatically represents a latching system of the container according to the invention.

In the different figures, the same references denote identical or similar components.

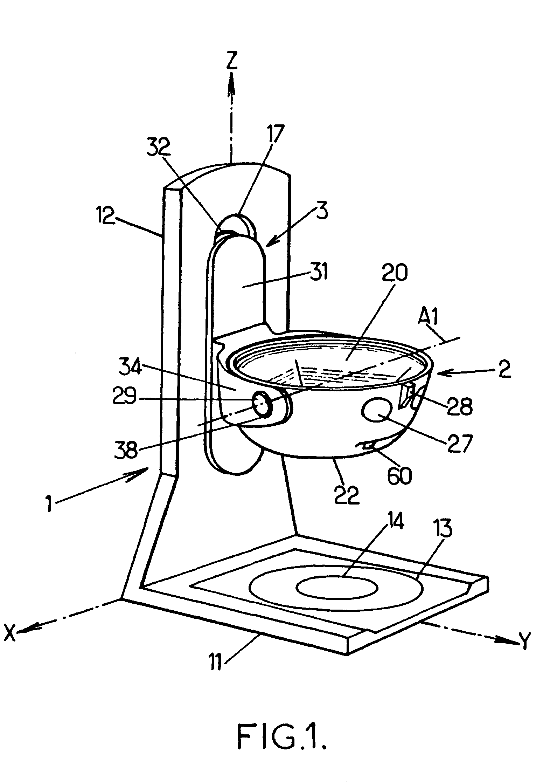

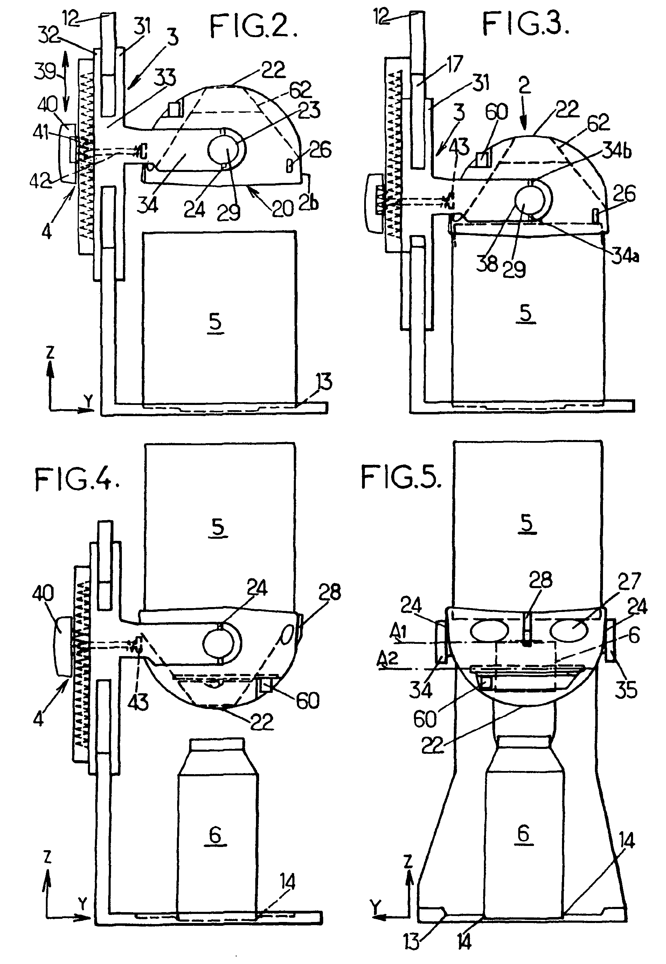

As shown in Figure 1, the invention relates to a distribution device for a powdery food product comprising the following main components:
- a stand 1, comprising a base 11 suitable in particular for receiving a feeding bottle 6, and an upright 12,
- a distribution head 2 suitable for receiving a container of powdery food product 5 (visible in Figures 2-5),
- an articulated linkage 3 interposed between said stand 1 and said distribution head 2.

The stand 1 of the distribution device comprises the base 11 which extends substantially horizontally in a horizontal plane (X-Y), this base being suitable for being placed on a preferably substantially horizontal surface.

The base 11 comprises on its upper surface fittings intended to receive on the one hand a container of powdery food product 5, and on the other hand a container for collection of the product 6 such as for example a feeding bottle or a cup, with a generally smaller diameter.

More particularly, a first indentation 13 makes it possible to position the container of powdery food product 5 face-to-face with the distribution head in an optimum manner. During the operation of engagement of the distribution head 2 on the container of powdery food product 5 by lowering which is described in details below, the optimum position of the container of powdery food product 5 in the indentation 13 makes this installation very easy.

A second indentation 14 is intended to position in an optimum manner a collecting container such as for example a feeding bottle or a cup or any other container used by a user.

It is understood that the base could include not just one, but several first indentations 13 for a powdery food product container or for a fluid product container in the broad sense having different base shapes (for example square, hexagonal, octagonal or any other shape). In the same way, it is understood that the base could include several second indentations 14 for collecting containers having different base shapes such as feeding bottles-with different diameters for example.

The stand 1 also comprises the upright 12 which extends substantially vertically along the axis Z from the base 11, said upright 12 having for example a rectangular cross-section.

The upright 12 comprises a recess 17, preferably passing through, which extends vertically over a determined length and which can for example have an oblong shape as represented in the figures.

The base 11 and the upright 12 form an integral and rigid assembly, for example made of a single piece or an assembly known in the art.

The articulated linkage 3 comprises a front wall 31 extending substantially vertically against the front surface of the upright 12 and a rear wall 32 parallel to the front wall 31 and extending substantially vertically against the rear surface of the upright 12. The front and rear walls 31, 32 are integrally interconnected by an intermediate portion 33 passing through the recess 17.

The front and rear walls 31, 32 and the intermediate portion 33 could also be designed in the form of a telescopic component penetrating into the upright 12.

The articulated linkage 3 also comprises two arms 34, 35 extending from said front wall 31 in the direction opposite to the upright 12 and having a general C shape with an opening opposite the upright 12.

The end of each of the arms 34, 35 comprises a bearing 38, the two bearings 38 being aligned along a horizontal axis A1 perpendicular to the axis Z of the upright. Each of these bearings 38 is suitable for receiving a journal 29 of the distribution head 2. The journals 29 supported in the bearings 38 form a rotation joint about the axis A1 in order to allow the swivelling movement of the distribution head 2. The articulated linkage 3 thus allows a vertical translation movement along Z axis and a swivelling movement about a horizontal axis A1, between the stand 1 and the distribution head 2.

The distribution head 2 comprises a reception housing 20 suitable for receiving the container of powdery product 5, and an outlet opening 22 situated opposite the reception housing 20 through which the powdery product is poured towards the container for collecting the product 6. The distribution head 2 has a general substantially circular shape, but can also have a different shape (for example square, hexagonal, octagonal or any other shape), in particular in order to be adapted to the shape of the product container 5.

In the distribution head 2 a channelling device 62 is arranged between the reception housing 20 and the outlet opening 22, so as to channel the powdery product from the inlet at the reception housing 20 down to the outlet at the outlet opening 22. This channelling device 62 has a generally tapered shape as shown in Figures 2, 3 and 4, which makes it possible to promote the flow of the product from the reception housing 20 down to the outlet opening 22.

The distribution head 2 also comprises at least one translucent component 27 which allows the user to see the channelling device 62 between the reception housing 20 and the outlet opening 22. The distribution head 2 also comprises on its outer surface a boss 28 projecting from the general shape of the distribution head, this boss contributing to the automatic unlocking function which is described below.

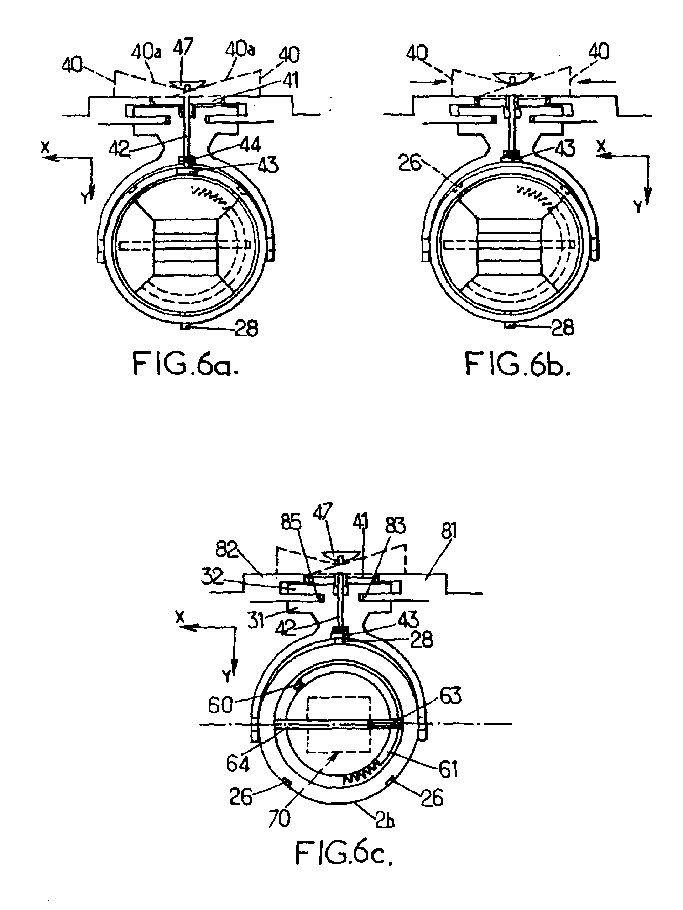

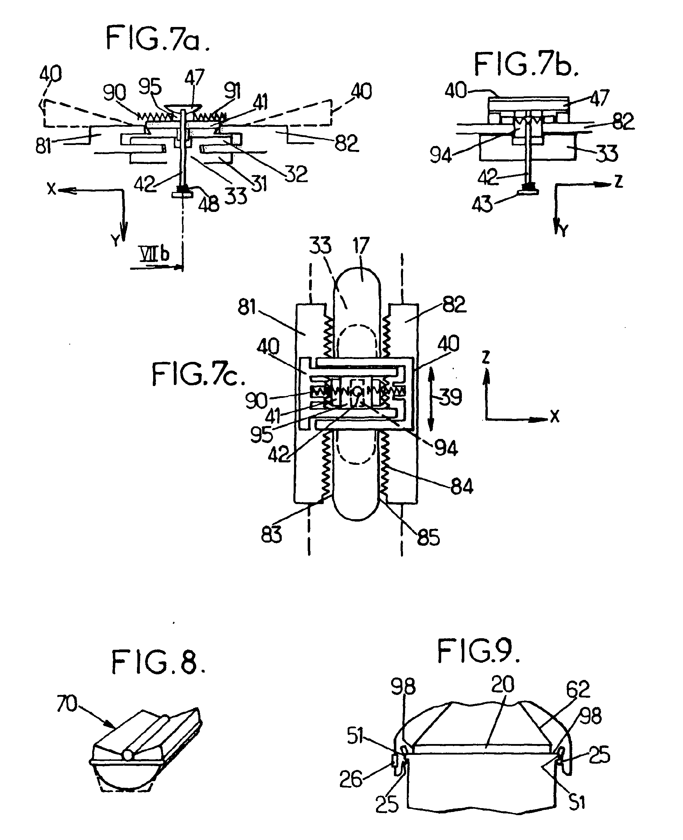

In the channelling device 62 a dosing device 70 is arranged for example in the form of a rotary valve as represented in Figure 8, a rotary valve which makes it possible to quantify the quantity of powdery product. The dosing device is also particularly visible in Figures 6a, 6b, 6c and 8. The dosing device 70 is borne by a shaft 64 which swivels about an axis of rotation A2 substantially parallel to the axis of rotation A1 of the distribution head 2. This dosing device has for example the shape of a sector of a cylinder as represented in Figure 8 open upwards in its rest position and mobile about the axis A2 being able to swivel substantially a half-turn about A2 in such a manner that the opening is situated downwards so as to discharge the powdery product towards the outlet opening 22 of the channelling device 62. The dosing device 70 is driven in rotation by an actuator 61 which has a toothed surface cooperating with teeth situated on a toothed part 63 of the rotation shaft 64 of the rotary valve. This actuator 61 can be displaced by a control lever 60 (also called a "dosing lever") accessible to the user. Other types of dosing device could be used without departing from the scope of the invention. The actuator 61 is returned to its rest position by a spring which is opposed to the displacements caused by the action of the user on the control lever 60.

On the other hand, the articulated linkage 3 also comprises a locking device 4 suitable for locking or releasing the vertical displacements of the said articulated linkage 3. The locking device 4 comprises at least one pusher 40 on which the user can act in order to unlock the locking device, a locking element 41 which engages with at least one tooth portion 84 integral with the upright 12, a locking pin 42 interposed between the distribution head and the locking element 41, and an unlocking cup 47 on which a slope 40a of the pusher 40 acts. The locking device 4 also comprises at least one fixed rail 81, 82 extending vertically and integral with the upright 12, a rail on which are arranged the tooth portions 84 which cooperate with the locking element 41. The detailed description and the operation of this locking device 4 will be described below.

Figures 2, 3, 4, and 5 illustrate a loading sequence of a new container of powdery food product. Thanks to the articulated linkage 3, the distribution head can be displaced according to at least two degrees of freedom: on the one hand according to a substantially vertical movement parallel to the axis Z, and on the other hand according to a swivelling movement about the axis A1, substantially parallel to the axis X. The distribution head 2 has in particular two main positions, a distribution position as represented in Figures 1, 4 and 5 in which the reception housing 20 is oriented upwards, and a loading position in which the distribution head has swivelled through 180°, and in which the reception housing 20 is oriented downwards, visible in Figures 2 and 3 in particular.

In the configuration of Figure 2, the distribution head 2 is in the loading position, the reception housing 20 for the product container is oriented downwards, whilst the outlet opening 22 is oriented upwards. In this loading position, the articulated linkage 3 bearing the distribution head 2 is free to move in the vertical direction (arrow 39) as the vertical position locking device 4 is automatically unlocked as will be explained in detail in the remainder of the description. The container of powdery food product 5 is positioned in an optimum manner on the base 11 of the stand 1 thanks to the indentation 13. The position of this indentation 13 is designed such that when the distribution head 2 is lowered towards the container of powdery product 5 the position of engagement in the plane XY is ideal. In a particular non-limitative case, as shown, where the container of powdery product is cylindrical and where the reception housing 20 of the distribution head 2 is cylindrical, the axis of the container of powdery product 5 is merged with the axis of the reception housing 20 of the distribution head. Thus the docking of the reception housing 20 on the product container 5 is perfect.

The docking is carried out by lowering the distribution head 2 onto the container 5 in order to achieve the configuration of Figure 3.

A latching device which will be described hereafter makes it possible to ensure the holding of the container 5 in the reception housing 20 for the subsequent operations.

After the engagement of the distribution head on the powdery product container 5, the distribution head is displaced from the loading position towards the distribution position, a displacement which comprises lifting and rotation through 180° in order to displace the distribution head and the container 5 into the opposite orientation, namely as shown in Figure 4:
- the container of a product 5 is then located above the distribution head,
- the reception housing 20 is oriented upwards and the outlet opening 22 is oriented downwards.

Apart from this swivelling movement, the distribution head 2 with its product container 5 can undergo a vertical movement upwards along the axis Z, because, as long as the distribution head 2 is oriented downwards the vertical position locking device 4 is automatically unlocked therefore vertical movement is possible; as soon as the distribution head has left the orientation of the loading position the automatic unlocking of the locking device 4 is no longer active, but the user can use the manual unlocking pushers 40 in order to adjust the vertical position of the distribution head 2 with its product container 5.

As shown in Figure 4, the reception container such as a feeding bottle 6 can be installed under the distribution head 2 in order to receive the powdery food product leaving the outlet opening 22. The base 11 of the stand 1 is provided with an indentation 14 intended to position the collecting container 6 below the outlet opening 22 in an ideal manner. Moreover the distribution head 2 equipped with the product container 5 can be adjusted according to the vertical direction Z subject to the use of the locking device 4, by a manual action on the pusher 40.

Thus the distribution of food product from the outlet opening towards the mouth of the collecting container 6 can be carried out under the best conditions thereby avoiding spilling the food product out of the collecting container 6.

Figures 4 and 5 also show the measuring lever 60 which allows the user to dispense a controlled quantity of powdery food product into the collecting container 6. Each action on the dosing lever 60 pours a volume of product equivalent to the volume of the dosing valve 70.

Moreover Figures 2, 3, 4 and 5 show an indexing mechanism of the distribution head in its two main angular positions, namely the loading position (Figures 2 and 3) and the distribution position (Figures 4 and 5). This indexing mechanism can for example be produced in the form of an indexing element 24, for example a pin forming part of the distribution head 2 is projecting from the outer surface of said distribution head in order to be housed in recesses 34a, 34b situated on the inner surfaces of the arms 34, 35 of the articulated linkage 3. In the loading position the indexing pins 24 are situated in the lower recesses 34a of said arms 34, 35. In the distribution position (Figures 4 and 5), these indexing pins 24 are situated in the upper recesses 34b of the arms 34, 35 of the articulated linkage 3.

The arms 34, 35 have a certain elastic deformation flexibility in the direction X. In nominal position, when the distribution head is installed normally between the two arms, pre-stressing tends to move the arms toward one another in order to hold the journals 29 correctly in the bearings 38. Similarly, this pre-stressing contributes to the abovementioned indexing function, because when the distribution head is in one of its two main angular positions, the indexing pin 24 is housed in one of the recesses 34a, 34b, and a swivelling force is applied beyond a certain predetermined threshold such that the arms move slightly apart in order to allow the indexing pin to pass outside the recesses 34a,34b.

Moreover, the elastic deformation flexibility of the arms 34, 35 in the direction X allows the removal of the distribution head, in order for example to clean it. A sufficient force in the direction of moving the arms apart from each other makes it possible to release one of the journals 29 in order to release the distribution head from its rotation shaft.

During the distribution of the powdery food product the user can, through at least one translucent component 27, see the powdery product flowing inside the distribution head 2 via the channelling device 62. This is in particular useful for knowing when the container 5 is empty or almost empty and therefore that it must be replaced by a new full container.

Moreover, the distribution head possesses on its outer surface the boss 28 situated preferably in its median part on the axis Y and situated opposite the upright 12 of the stand 1 when the head is in the distribution position (visible in Figures 1, 4 and 5). This boss 28, when the distribution head is in the loading position, is found face to face with a pusher element 43 integral with the unlocking pin 42 which allows the automatic unlocking of the vertical position locking device 4.

With reference to Figures 2-5 and 6a-6c, the articulated linkage 3 is guided on the upright 12 as follows. Between the two front 31 and rear 32 walls of the articulated linkage the intermediate portion 33 is arranged which is integral with the previous two walls, moving in the recess 17 of the upright 12. The recess 17 extends between edges 83 and 85 of the wall of the upright 12, the distance between these two edges 83, 85 is slightly greater than the width of the intermediate portion 33 which thus moves therein with a small clearance. On the other hand, the height of the recess 17 is much greater than the height of the intermediate portion 33 in order to allow sufficient travel for vertical displacement according to the arrow 39.

The vertical position locking device 4 of the articulated linkage 3 is in particular visible in Figures 6a, 6b, 6c, 7a, 7b and 7c. This device comprises two fixed rails 81 and 82 in the general shape of an L integral with the rear surface of the upright 12, each of these two rails 81, 82 extending in a vertical main direction and parallel to the main wall of the upright 12.

On the ends of the rails 81, 82 which face each other there are arranged the toothed portions 84 which cooperate with the locking element 41. This locking element 41 has a flat shape with a width corresponding to the distance which separates the toothed portions 84 of the respective rails 81 and 82. This locking element 41 comprises teeth which have a shape complementary to the toothed portions 84, for example a triangular shape. The locking element 41 is rigid with the articulated linkage in the direction of vertical displacement, and can also be displaced in the direction Y between a locked position in which its teeth are engaged with the tooth portions 84 of the fixed rails 81, 82 and an unlocked position in which its teeth are moved away from the tooth portions 84, thus allowing the vertical displacement of the articulated linkage 3.

The locking element 41 is rigid with an unlocking pin 42 as well as with an unlocking pusher 43 and an unlocking cup 47. This assembly comprises two main positions, a locked position to which it is returned by the spring 48 in the direction of the distribution head 2, and an unlocking position in which the assembly of the unlocking pin, the unlocking pusher and the unlocking cup as well as the unlocking element 41 are pushed back towards the direction opposite to the distribution head 2.

In the locking position, the locking element 41 interferes with the toothed portion 84 of the rear rails 81, 82 of the upright of the stand. Thus, the vertical position of the articulated linkage and of the distribution head 2 is fixed. The unlocking position is the rest position due to the action of the return spring 48.

In the unlocking position, the locking element 41 is moved away from the toothed portion 84 of the rails 81, 82 and no longer locks the vertical position of the articulated linkage 3 and of the distribution head 2 thus it is possible to displace the articulated linkage along the axis Z.

This unlocking position is obtained in two ways:
- manually by the action on the unlocking pushers 40 which comprise the slopes 40a cooperating with the unlocking cup 47, making it possible to bring the locking device into the unlocked position,
- automatically when the distribution head is in the loading position (Figure 6c) in which case the boss 28 comes into contact with the unlocking pusher 43, pushes the locking device backwards in the direction opposite to the distribution head 2 thereby releasing the locking element 41 from the toothed portions 84 of the rails 81, 82.

As soon as the distribution head is no longer in the loading position the boss 28 no longer acts on the unlocking pusher 43 and the locking device is returned to its rest position by the spring 48. Moreover when the distribution head is not in the loading position, it is still possible to unlock the locking device 4 manually by means of the push buttons 40 situated in the rear part of the upright of the stand. When the user presses the push buttons 40 toward each other, the slopes situated on these push buttons 40a raise the cup 47 so as to displace the locking device towards its unlocked position. The two push buttons are returned to their respective rest position i.e. moved away from each other by two return springs 90, 91. Thus as soon as the user relaxes his action on the push buttons 40 the locking device returns towards its locked position and therefore ensures the articulated linkage 3 and the distribution head 2 are held fixedly in the vertical position.

Moreover parts of the locking device 4 are provided in order to prevent the rotation of the device in its housing: the member 94 makes it possible to avoid a rotation of the device about the axis of the pin 42 thus the cup 47 always remains parallel to its rest position. Moreover, the locking device comprises a connecting part 95, positioned between the cup 47 and the locking element 41, and integral with these two pieces, this connecting part 95 receiving a housing for holding the ends of the springs 90, 91.

The distribution device according to the invention also comprises means for latching the product container 5 in the reception housing 20; this is represented in Figure 9. The reception housing is arranged in order to receive a container of powdery food product 5, to this end it has a plurality of stop components 98 distributed around the circumference of the reception housing 20. Moreover the container of powdery food product 5 comprises for example an edge 51 suitable for being received by these stop components 98 and projecting radially towards the outside in order to create a flange 51 which cooperates with at least a latching element like retaining clips 25 situated on the periphery of the reception housing 20 in order to hold the product container in its position after the engagement of the latter on the distribution head. Thus once the product container is engaged on the distribution head it is firmly held in position by these retaining clips 25 in particular during the inversion operations for moving towards the distribution position. The holding clips 25 are linked to at least one actuating element 26 making it possible to disengage the latching of the container 5. It is understood that the stop components 98, the edge 51 and the retaining clips 25 could be produced in any manner known in the art without departing from the scope of the present invention.

These actuating elements 26 are situated on the rear surface 2b of the distribution head; thus they are accessible only when the distribution head 2 is in its loading position. In the distribution position (Figures 4, 5, 6a and 6b) the actuating elements 26 are situated directly facing the articulated linkage arms 34, 35 and are therefore inaccessible to the user. Thus, it is not possible to disengage the container 5 as long as the container 5 and the distribution head 2 have not been returned towards the loading position, which avoids any risk of inadvertently spilling the powdery food product.

Among the advantages of the invention, it should be noted that the swivelling of the container 5 between the loading position and the distribution position makes it possible to avoid arching or compaction of the product which can occur in particular in the case of use with milk powder which is relatively sticky.

Moreover, the fact of being able to tilt the device back into the loading position or to lower it to the maximum according to its vertical displacement leads to a gain in terms of space required, which is useful when storing or transporting the distribution device.

It would be possible, without departing from the scope of the invention, to consider the use of this distribution device, not only for a powdery product, but for any fluid or liquid product or product of low viscosity.

## Claims

1. Distribution device for a fluid food product comprising:
- a stand (1) comprising a base (11) suitable for being placed on a horizontal plane and an upright (12),
- a distribution head (2), mounted on said stand, and comprising:
- a reception housing (20) suitable for receiving a container of powdery food product,
- an outlet opening (22),
- a channelling device suitable for channelling the flow of the product from the reception housing to outlet,
- a dosing device for the product channelled by the channelling device,
**characterized in that** said distribution head is connected by at least one articulated linkage (3) to said upright, the distribution head being mobile between a loading position in which the reception housing is oriented substantially downwards, and a distribution position in which the outlet opening is oriented substantially downwards.

2. Distribution device for a fluid food product according to claim 1, in which the articulated linkage comprises a swivelling linkage, the axis (A1) of which is substantially horizontal.

3. Distribution device for a fluid food product according to one of claims 1 to 2, in which the articulated linkage (3) comprises a linkage which is mobile along a substantially vertical axis (Z), making it possible to lower the distribution head towards the base when it is in the loading position.

4. Distribution device for a fluid food product according to claim 3, in which the vertical movement of the articulated linkage comprises a vertical position locking device (4) on the upright.

5. Distribution device for a fluid food product according to claim 4, in which the vertical position locking device is automatically unlocked when the distribution head is in the loading position.

6. Distribution device for a fluid food product according to one of claims 1 to 5, in which the base comprises a positioning indentation (13) making it possible to position the container face-to-face with the reception housing of the distribution head when the latter is in the loading position.

7. Distribution device for a food product according to one of claims 1 to 6, in which the reception housing comprises at least one latch element (25) suitable for engaging with the container in order to retain the latter in the reception housing.

8. Distribution device for a food product according to claim 7, also comprising at least one actuating element (26) making it possible to disengage the latch element in order to release the container.

9. Distribution device for a food product according to one of claims 2 to 8, in which the distribution head is held in the loading and distribution positions respectively by indexing elements (24), said indexing elements being preferably identical for the loading and distribution positions.

10. Distribution device for a food product according to one of claims 1 to 9, in which the channelling device also comprises at least one transparent part (27) through which the flow of the product is visible.

## Patentansprüche

1. Verteilungsvorrichtung für ein flüssiges Lebensmittelprodukt, umfassend:
- ein Gestell (1), umfassend eine Basis (11), die dafür geeignet ist, auf einer horizontalen Ebene platziert zu werden, und einen Ständer (12),
- einen Verteilungskopf (2), der an dem Ständer angebracht ist und folgendes umfasst:
- ein Aufnahmegehäuse (20), das dafür geeignet ist, einen Behälter mit einem pulverförmigen Lebensmittelprodukt aufzunehmen,
- eine Auslassöffnung (22),
- eine kanalbildende Vorrichtung, die dafür geeignet ist, den Fluss des Produkts aus dem Aufnahmegehäuse zu dem Auslass zu kanalisieren,
- eine Dosiervorrichtung für das durch die kanalbildende Vorrichtung kanalisierte Produkt,
**dadurch gekennzeichnet,**
**dass** der Verteilungskopf mit zumindest einer gelenkigen Verbindung (3) mit dem Ständer verbunden ist, wobei der Verteilungskopf zwischen einer Beladungsposition, in der das Aufnahmegehäuse im Wesentlichen nach unten orientiert ist, und einer Verteilungsposition, in der die Auslassöffnung im Wesentlichen nach unten orientiert ist, beweglich ist.

2. Verteilungsvorrichtung für ein flüssiges Lebensmittelprodukt gemäß Anspruch 1, bei der die gelenkige Verbindung eine Schwenkanlenkung umfasst, deren Achse (A1) im Wesentlichen horizontal ist.

3. Verteilungsvorrichtung für ein flüssiges Lebensmittelprodukt gemäß einem der Ansprüche 1 bis 2, bei der die gelenkige Verbindung (3) eine Anlenkung umfasst, die entlang einer im Wesentlichen vertikalen Achse (Z) beweglich ist, wodurch es ermöglicht wird, den Verteilungskopf in Richtung auf die Basis abzusenken, wenn er in der Beladungsposition ist.

4. Verteilungsvorrichtung für ein flüssiges Lebensmittelprodukt gemäß Anspruch 3, bei dem die vertikale Bewegung der gelenkigen Verbindung an dem Ständer eine Feststellvorrichtung (4) für die vertikale Position umfasst.

5. Verteilungsvorrichtung für ein flüssiges Lebensmittelprodukt gemäß Anspruch 4, bei dem die Feststellvorrichtung (4) für die vertikale Position automatisch entsperrt wird, wenn der Verteilungskopf in der Beladungsposition ist.

6. Verteilungsvorrichtung für ein flüssiges Lebensmittelprodukt gemäß einem der Ansprüche 1 bis 5, in der die Basis eine Positionierungseinsenkung (13) umfasst, die es ermöglicht, den Behälter direkt gegenüber zum Aufnahmegehäuse zu positionieren, wenn der letztere in der Beladungsposition ist.

7. Verteilungsvorrichtung für ein Lebensmittelprodukt gemäß einem der Ansprüche 1 bis 6, bei der das Aufnahmegehäuse zumindest ein Schnappelement (25) umfasst, das dafür geeignet ist, in den Behälter einzuklinken, um den letzteren in dem Aufnahmegehäuse zurückzuhalten.

8. Verteilungsvorrichtung für ein Lebensmittelprodukt gemäß Anspruch 7, auch umfassend zumindest ein Betätigungselement (26), das es ermöglicht, das Schnappelement (25) auszuklinken, um den Container freizugeben.

9. Verteilungsvorrichtung für ein Lebensmittelprodukt gemäß einem der Ansprüche 2 bis 8, bei dem der Verteilungskopf in der Beladungs- und Verteilungsposition jeweils durch Schaltelemente (24) gehalten wird, wobei die Schaltelemente für die Beladungs- und Verteilungsposition vorzugsweise identisch sind.

10. Verteilungsvorrichtung für ein Lebensmittelprodukt gemäß einem der Ansprüche 1 bis 9, bei dem die kanalbildende Vorrichtung auch zumindest einen transparenten Teil (27) umfasst, durch den der Fluss des Produkts sichtbar ist.

## Revendications

1. Dispositif de distribution pour produit alimentaire fluide comprenant :
- une embase (1) comportant un socle (11) apte à être posé sur un plan horizontal et un mât (12),
- une tête de distribution (2), montée sur ladite embase, et comportant :
- un logement de réception (20) apte à recevoir un récipient de produit alimentaire pulvérulent,
- une ouverture de sortie (22),
- un dispositif de canalisation apte à canaliser l'écoulement du produit depuis le logement de réception jusqu'à la sortie,
- un dispositif de dosage du produit canalisé par le dispositif de canalisation,
**caractérisé en ce que** ladite tête de distribution est reliée par au moins une liaison articulée (3) audit mât, la tête de distribution étant mobile entre une position de chargement dans laquelle le logement de réception est orienté sensiblement vers le bas, et une position de distribution dans laquelle l'ouverture de sortie est orientée sensiblement vers le bas.

2. Dispositif de distribution pour produit alimentaire fluide selon la revendication 1, dans lequel la liaison articulée comporte une liaison pivotante dont l'axe (A1) est sensiblement horizontal.

3. Dispositif de distribution pour produit alimentaire fluide selon l'une des revendications 1 à 2, dans lequel la liaison articulée (3) comporte une liaison mobile selon un axe sensiblement vertical (Z), permettant d'abaisser la tête de distribution vers le socle lorsqu'elle est en position de chargement.

4. Dispositif de distribution pour produit alimentaire fluide selon la revendication 3, dans lequel le mouvement vertical de la liaison articulée comporte un dispositif de verrouillage (4) de la position verticale sur le mât.

5. Dispositif de distribution pour produit alimentaire fluide selon la revendication 4, dans lequel le dispositif de verrouillage de la position verticale est automatiquement déverrouillé quand la tête de distribution est en position de chargement.

6. Dispositif de distribution pour produit alimentaire fluide selon l'une des revendications 1 à 5, dans lequel le socle comprend une empreinte (13) de positionnement permettant de mettre le récipient en regard avec le logement de réception de la tête de distribution lorsque celle-ci est en position de chargement.

7. Dispositif de distribution pour produit alimentaire selon l'une des revendications 1 à 6, dans lequel le logement de réception comporte au moins un organe d'encliquetage (25) apte à s'engager avec le récipient pour retenir celui-ci dans le logement de réception.

8. Dispositif de distribution pour produit alimentaire selon la revendication 7, comportant en outre au moins un organe d'actionnement (26) permettant de désengager l'organe d'encliquetage pour libérer le récipient.

9. Dispositif de distribution pour produit alimentaire selon l'une des revendications 2 à 8, dans lequel la tête de distribution est maintenue dans les positions de chargement et de distribution respectivement par des organes d'indexage (24), lesdits organes d'indexage étant de préférence identiques pour les positions de chargement et de distribution.

10. Dispositif de distribution pour produit alimentaire selon l'une des revendications 1 à 9, dans lequel le dispositif de canalisation comporte en outre au moins une partie transparente (27) au travers de laquelle est visible l'écoulement du produit.
